# EUROPEAN PATENT SPECIFICATION

(11) **EP 2 322 828 B1**
(45) Date of publication and mention of the grant of the patent: **03.07.2013**
(21) Application number: 10010580.8
(22) Date of filing: 24.09.2010
(51) Int. Cl.: F16K 31/524

(54) **Valve with sliding closing element**
Ventil mit Absperrschieber
Soupape avec élément obturateur coulissant

(30) Priority: 11.11.2009 IT MI20091972
(43) Date of publication of application: 18.05.2011
(73) Proprietor: Anco Rubinetterie Di Bonomini Angelo E C. S.n.c., 25069 Villa Carcina (BS) (IT)
(72) Inventor: Bonomini, Oreste, 25069 Villa Carcina (Brescia) (IT)
(74) Representative: Lecce, Giovanni

(56) References cited:
- DE-A1- 2 853 719
- DE-A1- 3 142 062
- DE-B- 1 040 330
- DE-C- 712 289
- DE-C2- 1 050 143
- FR-A- 991 293
- FR-A- 1 053 060
- US-A- 1 809 567
- US-A- 3 369 564
- US-A- 5 309 934

## Description

The present invention relates to a tap or valve with sliding gate. More in particular, the present invention relates to a tap wherein the fluid intercepting member is slidingly moved into the body, along the passage seat of the fluid itself.

Advantageously, the tap of the present invention is moved through a lever, which by a 90° rotation switches from the totally open position to that of total closing of the fluid passage into the tap body.

As known, several types of taps exist, used both in civil and industrial plants. In civil building, in service rooms and in kitchens, the relevant washbasins and sinks are usually provided with single-control mixing taps which tend to completely replace the taps with screwdown and rotating actuating knob. In the industrial field, fluid distribution networks and machine tool systems are typically provided with intercepting taps called gates, or of the type known as ball valves. In this last mentioned very widespread type of taps, in fact, the gate member consists of a ball, seated in a complementary seat of the body and set in rotation at 90° by a lever integral to a stem protruding from the same ball. The latter is axially provided with a through hole that allows the fluid passage when the same hole communicates at least partly with the flow fed into the valve body. By rotating the control lever, the ball changes its position and moves with the non-pierced portion to stop the flow into the valve body. This traditional and widespread solution is capable of quickly intercepting the passage of a fluid, for example water, along a distribution network or on a plant of a given machinery, but it exhibits some significant drawbacks.

In the first place, the ball carries out a sliding seal into the body, relative to the sealing rings it is provided with, and the surfaces that come into contact should therefore mate very accurately. In the quite frequent case of impurities in the water, such as for example scale residues or grains of sand, the surface of the seals or sealing rings, generally made of PTFE (polytetrafluoroethylene), may be abraded and cut, although lightly; however, this is sufficient to cause a continuous leak due to the imperfect seal. In order to obviate the drawback there is no other solution than replacing the seals, which implies a burdensome and thus expensive work. The bodies of known valves are generally made in two complementary half parts; obtaining each half part therefore implies repeated and burdensome precision operations, which lead to a high production cost.

A further drawback found in known ball valves relates to the fact that stagnating water remains into the ball hole and into the chamber comprised between the two PTFE sealing rings, with the valve in totally open or closed position. Bacterial cultures could thus develop, especially when the valve remains totally open or closed for long periods; the bacteria could thus enter into circulation at the subsequent operation of the same valve.

The drawback may not be important in cooling systems or in industrial water networks, but instead it takes on considerable importance if the valves are installed on networks or circuits for feeding drinking water or liquids intended for food consumption. To eliminate this drawback, in some cases the balls are provided with cross discharge holes, so that water stagnation on a predetermined portion of their surface is prevented; this solution, however, further increases the already high production cost of the balls.

DE 1040330 discloses a check valve or non-return valve, i.e. a device that allows fluid to flow through it when it is open and is automatically closed to prevent a backward flow. Such no-return valve for a pressurized gas comprises a body formed by two halves screwed together and resilient means for urging the closure member to close the passage when the pressure drops so that the axial displacement of the closure member is not exclusively determined by the position of the control member.

Also DE 712 289 discloses a non-return valve with resilient means controlling the position of the closure member together with the position of the control lever, the rotation of which being 180° from the fully open position to the fully closed position.

US 3 369 564 discloses a three-port transfer valve with a continuously opened port and two ports that are positioned in opposed coaxial relationship and can selectively be opened by the closure member.

The object of this invention is to obviate the drawbacks mentioned hereinabove.

More in particular, the object of the present invention is to provide a tap with sliding gate suitable for carrying out a seal which should not determine any sliding between the members concerned or portions thereof.

A further object of the invention is to provide a tap as defined above which, as a consequence, should be free from risks of deterioration of the sealing members due to the possible presence of scale residues or other impurities in water.

Last but not least, an object of the invention is to provide a tap with sliding gate wherein the sealing members are constantly in contact with the fluid and are free from portions whereon even a minimal amount of water or fluid in general stagnates.

A further object of the invention is to provide the users with a tap with sliding gate intended for ensuring high level of resistance and reliability over time, also such as to be easily and inexpensively constructed. These and yet other objects are achieved by the tap with sliding gate as claimed in claim 1. Additional advantageous features of the invention are recited by the dependent claims.

The construction and functional features of the tap with sliding gate of the present invention shall be better understood from the following detailed description, wherein reference is made to the annexed drawing tables showing a preferred and non-limiting embodiment thereof, wherein:
figure 1 schematically shows a side partial view of a tap body suitable for being provided with the sliding gate of the present invention;
figure 2 schematically shows a top view of the same body of figure 1;
figure 3 schematically shows the longitudinal section of the body shown in figure 1;

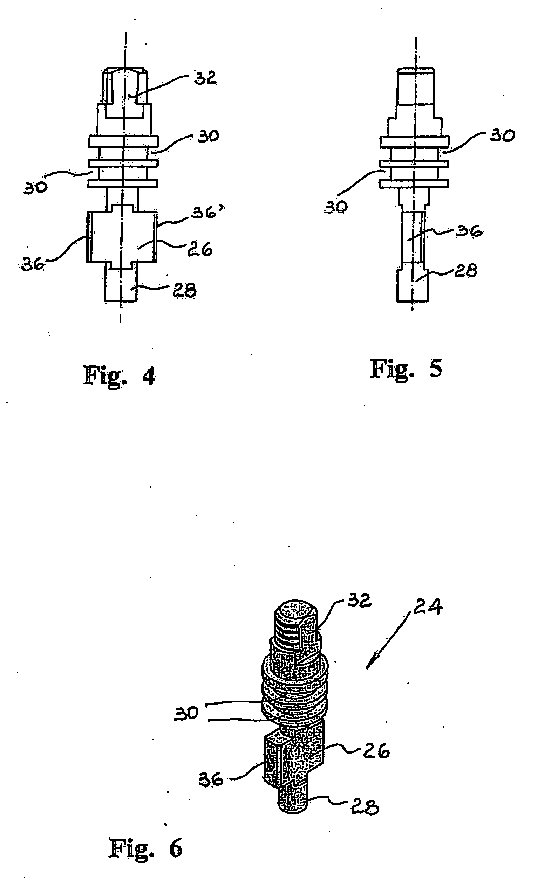

figures 4 and 5 schematically show as many side views of the member that moves the tap gate according to the present invention;
figure 6 schematically shows a perspective view of the same member of the previous figures 4 and 5;
figures 7 to 10 schematically show as many front, side, bottom and top views of the gate combined with the tap of the present invention;
figure 11 schematically shows a perspective view of the same gate;
figures 12, 13 and 14 schematically show a side exploded view and a perspective exploded view of the tap with sliding gate of the present invention;
figures 15, 16 and 17 schematically show as many top, partly cutaway views of the tap of the present invention with the gate arranged in the different operating positions;
figure 18 schematically shows a side view of a gate having a different and alternative configuration as regards the through and shaped opening;
figures 19, 20 and 21 schematically show as many top, partly cutaway views of the tap of the present invention with the gate of figure 18 in the different operating positions;
figure 22 schematically shows a side view of a further alternative configuration of the through and shaped opening of the gate combined with the tap of the present invention;
figures 23, 24 and 25 schematically show as many top, partly cutaway views of the tap of the present invention with the gate of figure 22 arranged in the different operating positions;
figures 26 to 32 relate to an embodiment of a tap with sliding gate which does not form part of present invention.

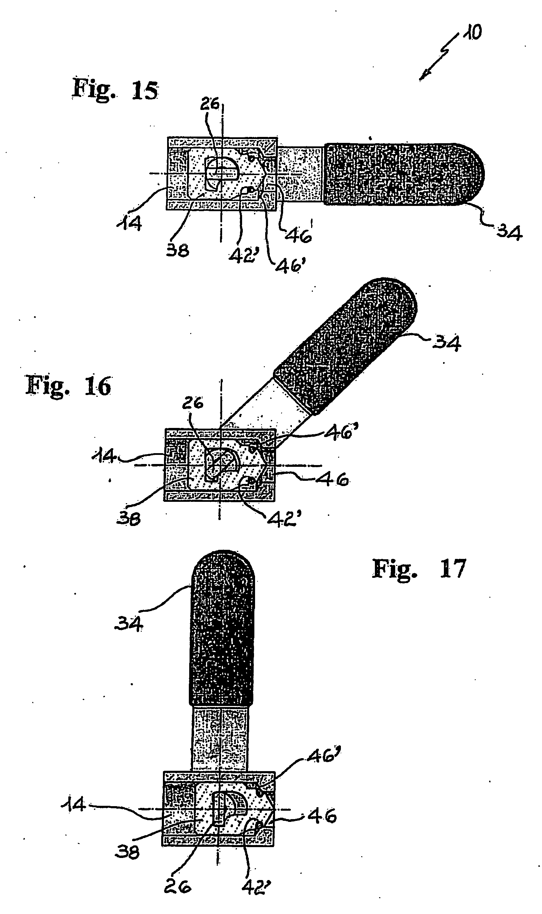

With reference to the above figures, the tap with sliding gate of the present invention, globally indicated with 10 in figure 15, comprises a body 12 of any shape and dimension, wherein a hole 14 is axially made for the passage of fluid, typically water.

Said body, made of brass or other suitable material, therefore defines opposite inlet 16 and outlet 18 or vice versa of the fluid and is connected in a known manner, at least at an end, to a water network, for example by threading, threaded ring nuts and the like. Body 12 comprises a hole 20 oriented orthogonally relative to hole 14 and communicating therewith; preferably, hole 20 is made starting from a cylindrical appendix 22 that protrudes along the same body 12. Hole 20 constitutes the inlet for introducing a control member 24 into body 12 intended for cooperating with the gate that shall be described hereinafter. The control member 24 consists of a shaped stem that comprises, in the central-bottom portion, an integral blade 26 that extends into a cylindrical end 28; said latter inserts into a complementary recess 28' with circular plan, formed at the base of hole 14 at the vertical axis "X" of hole 20. On top of blade 26, the control member 24 comprises one or more grooves 30 for as many seals, as well as a threaded end and provided, for example, with opposite flattened areas 32 for positioning and fixing an operating lever 34, or a knob or equivalent. The flattened areas 32 may be replaced, for positioning and fixing lever 34, with a toothed broaching, a square or equivalent means. The diameter of the seat defined by hole 20 is such as to ensure the seal of the control member 24 in the portion thereof comprising the seal(s) abutted into groove 30; the extraction of the control member 24 from body 12 is prevented by the addition of a snap ring, or a threaded ring nut or by a tapering of the same body 12.

Blade 26 exhibits a substantially regular parallelepiped configuration, wherein the two opposite rectangular faces with shorter extension 36 and 36' are provided with a chamfer along the vertical sides.

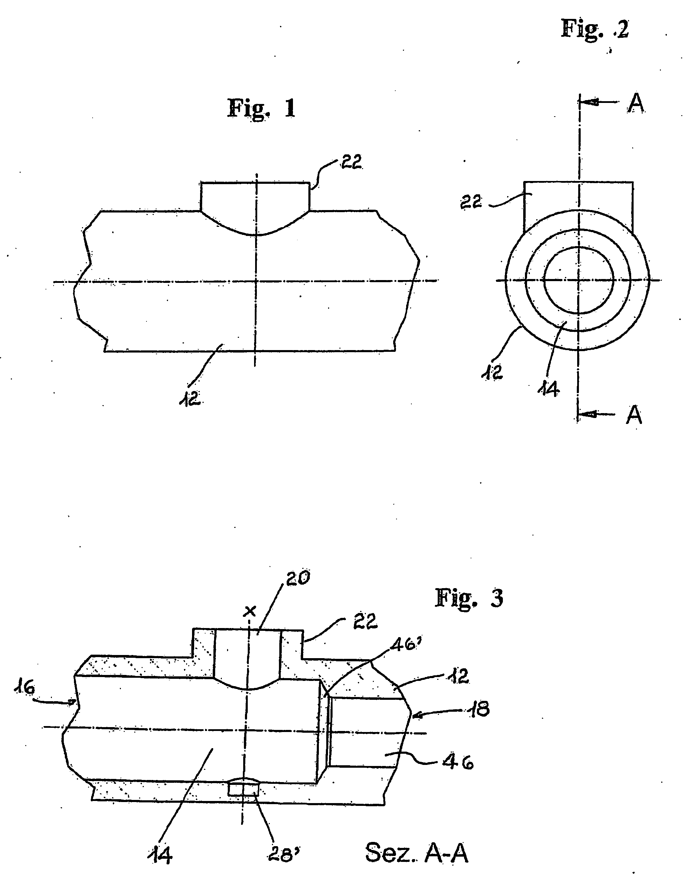

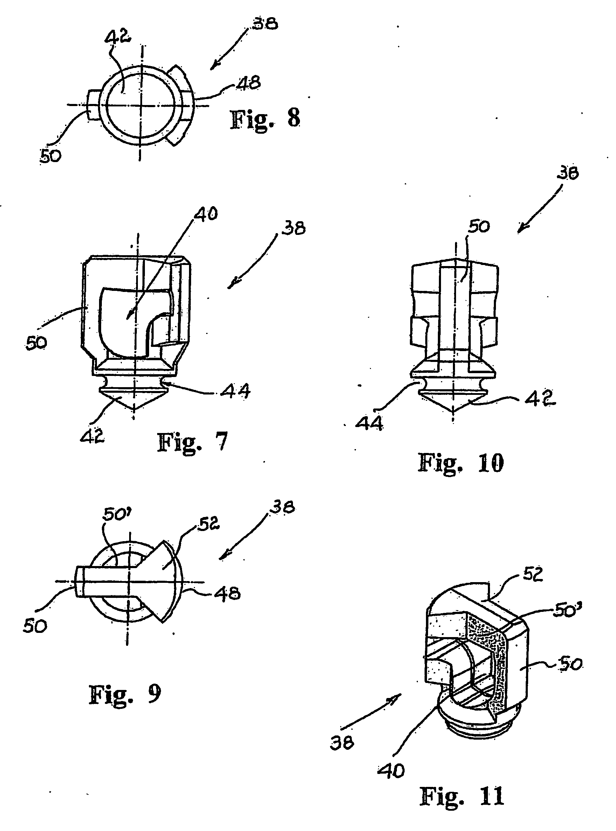

The control member 24 interacts with the gate that is seated in body 12 and that is globally indicated with reference numeral 38 in figures 8 to 17. Said gate, made of any suitable material and preferably of acetalic resin POM, consists in a shaped body that defines an extended through and shaped opening 40, constituting a cam wherein blade 26 of the control member 24 abuts and rotates. In particular, gate 38 on one front comprises a conical end 42, close whereto there is formed an overlying annular seat 44 for a seal 42' such as for example an O-ring or equivalent. Said conical end 42 of gate 38 is intended for intercepting, with seal 42', the fluid into body 12; hole 14 of the latter, to this end, defines a portion 46 with smaller diameter, as indicated in figure 3, jointed to hole 14 with larger diameter through an intermediate conical inlet or portion 46'. The conical end 42 of gate 38 is integral to a shaped body that develops with annular pattern and comprises a portion 48 with arched-convex profile, projecting relative to the same end 42. The shape or outer profile of portion 48 is such as to conjugate with the inner side surface of body 12, corresponding to hole 14. In a position opposite portion 48, gate 38 defines a portion 50 with quadrangular section, which bends at 90° in an integral branch 50' which connects to the same portion 48 forming a planar surface 52 substantially shaped as a "T".

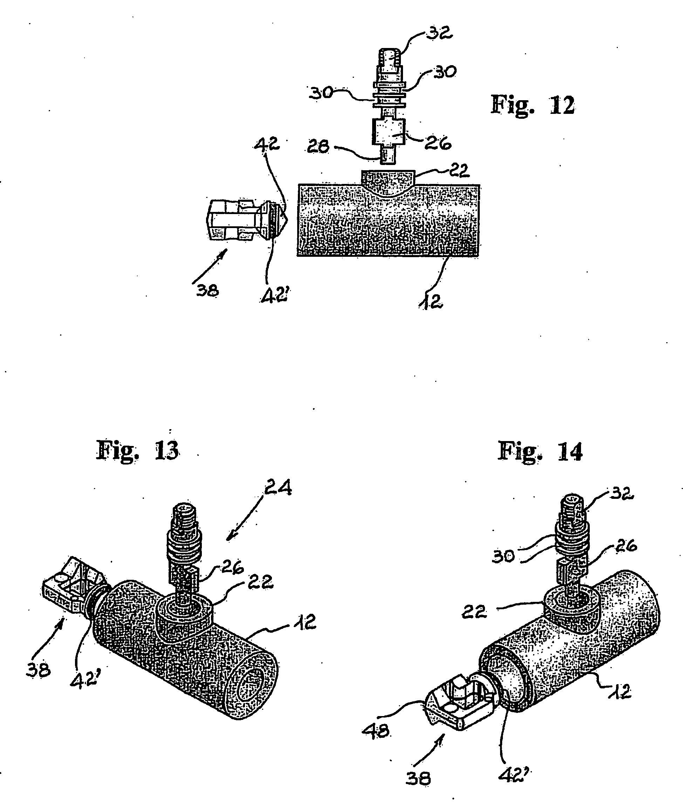

In gate 38 there is formed the through and shaped opening 40, delimited by the inside surfaces or walls of portion 48 with arched-convex profile, by the conical end 42, by portion 50 and by branch 52. Opening 40 comprises, in its development, rectilinear, arched-concave and arched-convex zones, constituting a sliding cam of gate 38 by means of the partial rotation of the control member 24. Blade 26 of the latter, in fact, is intended for abutting into opening 40 of gate 38; as is seen in figures 12; 13, 14 and more in particular, in the next figures 15 to 17. During the assembly of tap 10 of the present invention, gate 38 is inserted into hole 14 with the conical end 42 facing portion 46 with smaller diameter of the same hole. Gate 38 is made to advance into hole 14 up to abutting the conical inlet 46' with its seal 42'. At this point, the control member 24 is inserted into hole 20 and manually rotated to make blade 26 insert into opening 40 of gate 38; in the same time, the cylindrical end 28 of the control member 24 abuts into recess 28'.

The seals or toric rings arranged in grooves 30 of the control member 24 ensure the seal of the same member into hole 20; in order to stabilise the control member 24 against the exit from body 12 there are provided, for example, a snap ring, a threaded ring nut or a tapering.

The operating lever 34 is fixed to the top end of the control member 24 in a known manner, the manual rotation whereof in clockwise and counter clockwise direction determines the movement of blade 26 into the shaped opening 40 of gate 38. Figures 15, 16 and 17 show in detail the various positions of blade 26, as well as the consequent movement or axial sliding into hole 14 of gate 38. In particular, figure 15 shows lever 34 into alignment position with the fluid passage holes 14 and 46 and with gate 38 retracted relative to the conical inlet 46' whereon seal 42' makes no seal. In such condition, the fluid passage is maximum. Figure 16 schematises the intermediate situation, with lever 34 partially rotated and gate 38 made to partly advance by blade 26 towards the conical inlet 46'. In such condition, the fluid passage is limited but still possible. In figure 17, lever 34 is in totally rotated and gate 38 is in totally advanced position so that seal 42' closes onto the conical inlet 46' and prevents the fluid passage into hole 46. In all cases, the shape of gate 38 is such as to not substantially reduce the fluid passage along hole 14.

Of course, the configuration and the development of the shaped through opening 40 of gate 38 and the arrangement of blade 26 may be other than those shown in the figures, but in any case always such as to define at least one condition of opening or passage of the same fluid, irrespective of the angular positions of lever 34 and/or of the rotation thereof in clockwise or counter clockwise direction.

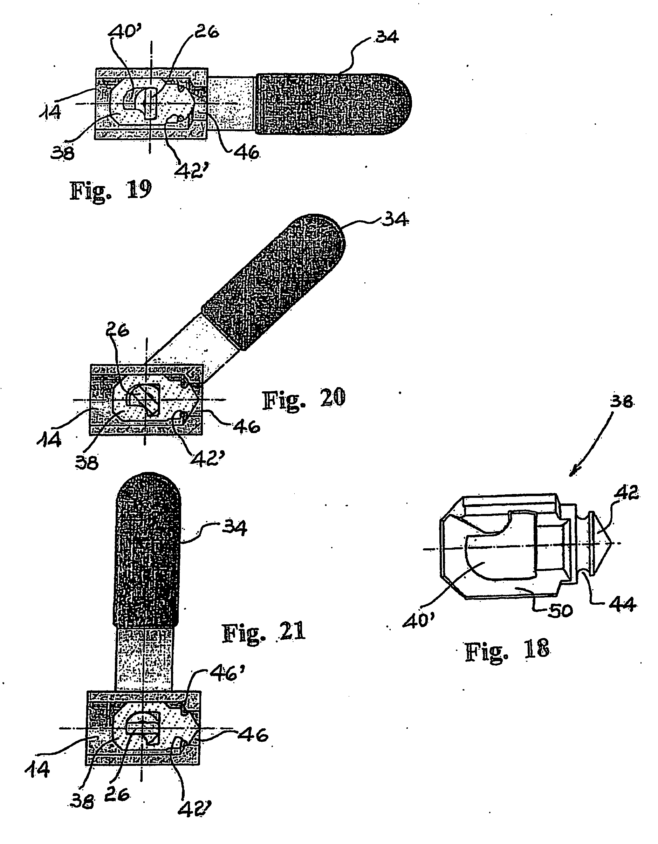

For example, figure 18 shows a side view of gate 38 provided with a through opening configured differently from what described and illustrated above; such through opening, in this case, is indicated with reference numeral 40' and is substantially mirror to opening 40 of the gate illustrated in figures 7 to 11. Figures 19, 20 and 21 show, in parallel with figures 15, 16 and 17 of the previous embodiment, the various positions of blade 26 and the consequent axial sliding into hole 14 of gate 38. It is noted, in particular, that in figure 19 the gate is fully retracted relative to hole 46 and thus the fluid passage is total or maximum; in figure 20, the gate is closer to hole 46 but always allows the passage of a certain amount of fluid. In figure 21, on the other hand, gate 38 closes with seal 42' onto the conical inlet 46' and prevents the fluid passage into hole 46.

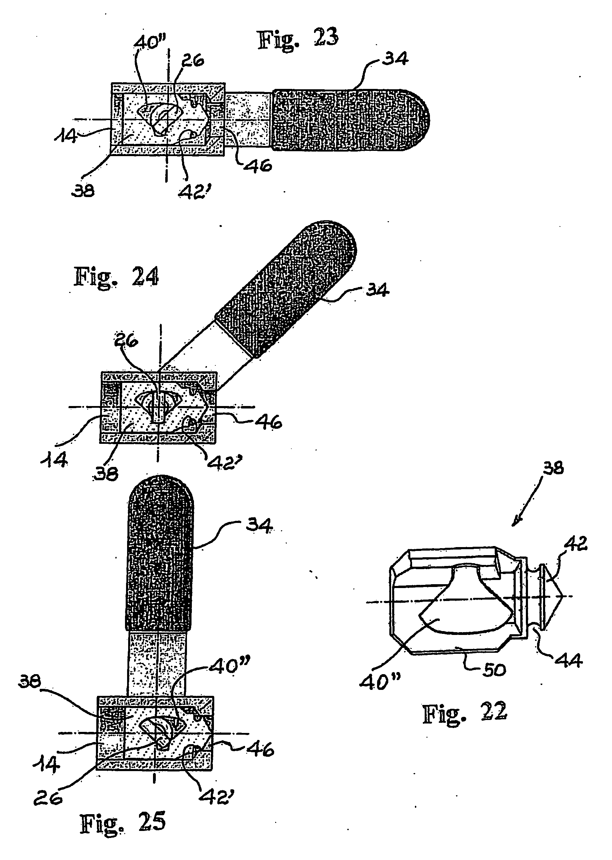

Figure 22 constitutes a further example of a possible embodiment of the through and shaped hole, here indicated with reference numeral 40", of gate 38 of figures 7 to 11. Such opening has a basically triangular shape and figures 23, 24 and 25 show the various positions that blade 26 takes therein for allowing the total (figure 23) or partial (figure 24) fluid passage or for intercepting and preventing (figure 25) the passage of the same fluid into hole 46.

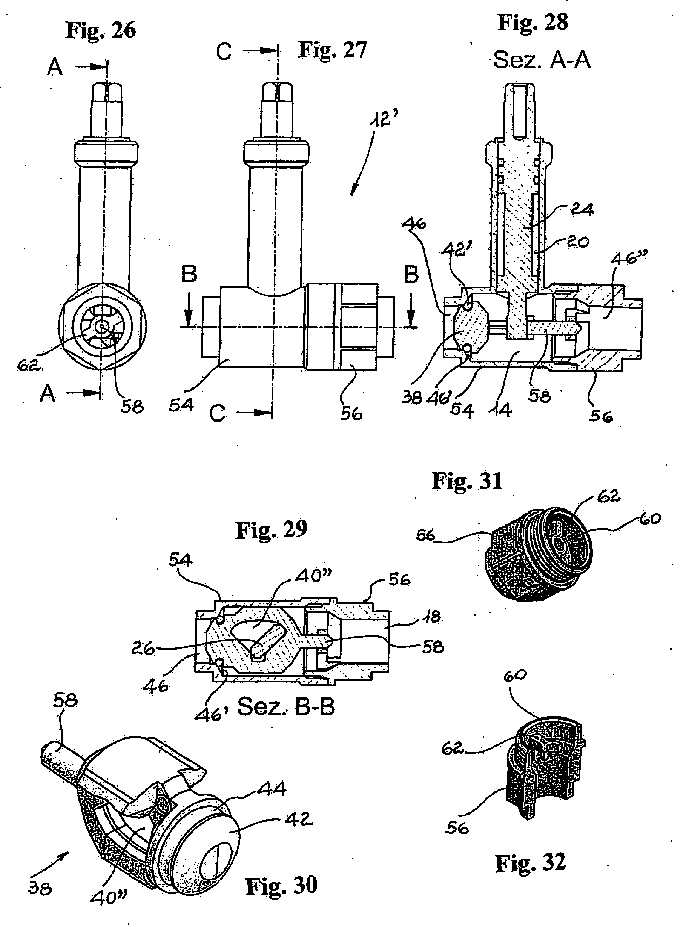

Figures 26 to 32 relate to an embodiment of a tap with sliding gate thst does not form part of the invention. According to this alternative solution, for which the same reference numerals as the previous solution are used as regards common components or parts, the tap body, indicated with reference numeral 12' in figure 27, is advantageously made into two portions, indicated with reference numerals 54 and 56 in figures 27, 28 and 29. This solution allows making a body 12' wherein both inlet and outlet 16, 18, irrespective on the left or on the right, have the same diameter, as is seen in figures 28, 29; hole 14 wherein gate 38 slides, on the other hand, has a larger diameter than that of openings 16, 18 and for jointing to hole 46, it decreases by diameter at the conical portion 46'. At the opposite end, the hole that defines the opening made on portion 56 and that has the same diameter as that of hole 46, is indicated with reference numeral 46". By way of an example, portion 54 corresponds to that wherein holes 14 and 46 are made, whereas in portion 56 there is formed hole 46". Said portion 56 substantially defines a threaded sleeve that engages into complementary threading created in portion 54.

Moreover, as is seen in particular in figures 28, 29 and 30, gate 38 is provided with a back support, which develops centrally from the front opposite the conical end 42 as a stem 58 with preferably circular section. Stem 58 extends into portion 56 or threaded sleeve of body 12' for fitting into a hole 60; said latter is made at the centre of a staple 62, diametrically extended into the same sleeve. In this way, gate 38 is optimally supported for a precise sliding into body 12'.

According to this alternative embodiment, the control member 24 comprising blade 26 is free from cylindrical end 28 suitable for inserting into seat 28' as provided in the previously described solution; this is made possible thanks to a suitable sizing of the control member 24, that has the necessary stiffness.

In figures 26 to 30, in particular in the last two 29 and 30, the through and shaped opening of gate 38 by way of an example is that indicated with reference numeral 40" in figures 22 to 25 of the above solution; it is understood, also, that said opening of gate 38 may be different and coincide, for example, with that already indicated with reference numeral 40 or 40'.

## Claims

1. A valve (10) with a sliding gate (38), comprising a metal body (12) wherein a first hole (14) develops axially and extends in a hole (46) with smaller diameter that define two openings (16, 18), for the inlet and the outlet of the fluid respectively, in said body (12) there being provided a second hole (20) along a vertical axis "X", said second hole being orthogonal and communicating with said first hole (14), wherein there is arranged a control member (24), a portion of which engages a shaped through opening (40 - 40' - 40") of said gate (38), abutted along said first hole (14),
said valve being **characterised in that** said control member (24) comprises a shaped stem that, in the central-lower zone, exhibits a portion suitable for engaging in said opening (40-40'-40") of the gate (38) for causing an axial displacement thereof and comprises a blade (26) of substantially parallelepiped shape wherein the two opposite rectangular faces of shorter extension (36 - 36') are chamfered along the vertical sides, the blade (26) being extended at the bottom into a cylindrical end (28) that fits into a complementary recess (28') obtained at the base of the first hole (14) at the vertical axis "X" of the second hole (20),
wherein said first hole (14) and hole (46) with a smaller diameter are jointed to each other by a conical inlet (46') whereon a flow stopping means carried by the gate (38) acts,
wherein said stopping means that acts on the conical inlet (46') comprised between said first hole (14) and hole (46) with a smaller diameter, consists of a seal (42') arranged in an annular seat (44) of said gate (38),
wherein said seal (42') is arranged adjacent to a conical end (42) of said gate (38), which extends in a shaped body with annular development comprising a first portion (48) with arched-convex profile suitable for abutting a portion of the inner side surface of the body (12) defined by said first hole (14),and
wherein said shaped body of the gate (38) further comprises a second portion (50) with quadrangular section that bends at 90° into an integral branch (50') and connects to said first portion (48) forming a planar surface (52) substantially shaped as a "T".

2. The valve according to claim 2, **characterised in that** said control member (24) comprises, on top of said blade (26), one or more grooves (30) for as many seals, as well as an end portion provided with threading and/or opposite flattened areas (32) for positioning and fixing an operating lever (34) or equivalent.

3. The valve according to claims 1, **characterised in that** said through and shaped opening (40 - 40' - 40") of said gate (38) is delimited by the inner walls of the first portion (48) with arched-convex profile, by the conical end (42), by the second portion (50) and by the branch (52), said opening (40 - 40' - 40") comprising rectilinear, arched-concave and arched-convex zones in its development, which define a cam for the sliding of the gate (38) based on the rotation imposed to the blade (26) of the control member (24).

4. The valve according to claim 1, **characterised in that** the second hole (20) is made on the body (12) starting from a cylindrical appendix (22) protruding along the same body (12).

## Patentansprüche

1. Ventil (10) mit einer gleitenden Pforte (38), umfassend einen Metallkörper (12), wobei eine erste Öffnung (14) sich axial entwickelt und sich in einer Öffnung (46) mit kleinerem Durchmesser verlängert, welche zwei Öffnungen (16, 18) für den Einlass bzw. den Auslass des Fluids begrenzen, wobei in dem Körper (12) eine zweite Öffnung (20) entlang einer Vertikalachse "X" vorgesehen sind, wobei die zweite Öffnung orthogonal ist und mit der ersten Öffnung (14) kommunizierend verbunden ist, wobei ein Steuerelement (24) angeordnet ist, von welchem ein Abschnitt in eine geformte Durchgangsöffnung (40 - 40' - 40") der Pforte (38) eingreift, anliegend entlang der ersten Öffnung (14),
wobei das Ventil **dadurch gekennzeichnet ist, dass** das Steuerelement (24) einen geformten Schaft umfasst, welcher in der zentralen unteren Zone einen Abschnitt aufweist, der zum Eingriff in die Öffnung (40 - 40' - 40") der Pforte (38) geeignet ist, um eine axiale Versetzung davon zu bewirken und ein Blatt (26) von im wesentlichen parallelepipedischer Form umfasst, wobei die zwei entgegengesetzten Flächen von kürzerer Erstreckung (36 - 36') entlang den vertikalen Seiten abgeschrägt sind, und wobei das Blatt (26) an dem Boden in ein zylindrisches Ende (28) erweitert ist, welches in eine komplementäre Ausnehmung (28') passt, welche an der Basis der ersten Öffnung (14) an der Vertikalachse "X" der zweiten Öffnung (20) erhalten ist,
wobei die erste Öffnung (14) und die Öffnung (46) mit einem kleineren Durchmesser durch einen konischen Einlass (46') miteinander verbunden sind, auf welchen eine Strömungsstopp-Einrichtung wirkt, die durch die Pforte (38) getragen wird,
wobei die Stopp-Einrichtung, welche auf den konischen Einlass (46') wirkt, umfasst zwischen der ersten Öffnung (14) und der Öffnung (46) mit kleinerem Durchmesser, aus einer Dichtung (42') gebildet ist, die in einem ringförmigen Sitz (44) der Pforte (38) angeordnet ist,
wobei die Dichtung (42') benachbart zu einem konischen Ende (42) der Pforte (38) angeordnet ist, welche sich in einem geformten Körper mit ringförmiger Entwicklung umfassend einen ersten Abschnitt (48) mit bogenförmigem konvexem Profil erstreckt, geeignet zur Anlage eines Abschnitts der inneren Seitenoberfläche des Körpers (12), der durch die erste Öffnung (14) begrenzt ist, und
wobei der geformte Körper der Pforte (38) ferner einen zweiten Abschnitt (50) mit viereckigem Querschnitt umfasst, welcher mit 90° in einen integralen Zweig (50') gebogen ist und an den ersten Abschnitt (48) anschließt, wobei eine ebene Oberfläche (52) ausgebildet wird, die im Wesentlichen wie ein "T" geformt ist.

2. Ventil nach Anspruch 2, **dadurch gekennzeichnet, dass** das Steuerelement (24) auf der Oberseite des Blattes (26) eine oder mehrere Nuten (30) für ebenso viele Dichtungen, sowie einen Endabschnitt umfasst, der mit Gewinde und/oder gegenüberliegenden abgeflachten Bereichen (32) zum Positionieren und Befestigen eines Betätigungshebels (34) oder Äquivalentes umfasst.

3. Ventil nach Anspruch 1, **dadurch gekennzeichnet, dass** die durchgängige und geformte Öffnung (40 - 40' - 40") der Pforte (38) durch die inneren Wände des ersten Abschnitts (48) mit gebogen konvexem Profil, durch das konische Ende (42), durch den zweiten Abschnitt (50) und durch den Zweig (52) begrenzt ist, wobei die Öffnung (40 - 40' - 40") geradlinige gebogen konkave und gebogen konvexe Zonen in ihrem Verlauf aufweist, welche eine Kurve für das Gleiten der Pforte (38) auf der Grundlage der Rotation begrenzen, welche dem Blatt (26) des Steuerelements (24) auferliegt.

4. Ventil nach Anspruch 1, **dadurch gekennzeichnet, dass** die zweite Öffnung (20) auf dem Körper (12) ausgehend von einem zylindrischen Fortsatz (22), der entlang desselben Körpers (12) vorsteht, hergestellt ist.

## Revendications

1. Valve (10) à clapet coulissant (38), comportant un corps métallique (12) dans lequel un premier alésage (14) se développe axialement et se prolonge en un alésage (46) de diamètre plus petit qui définit deux ouvertures (16, 18), pour l'entrée et la sortie du fluide respectivement, ledit corps (12) contenant un second alésage (20) suivant un axe vertical "X", ledit second alésage étant en direction orthogonale au premier alésage et en communication avec ce dernier (14), dans lequel est disposé un élément de commande (24), dont une portion s'engage dans une ouverture traversante adaptée (40 - 40' - 40") dudit clapet (38), en butée le long dudit premier alésage (14),
ladite valve étant **caractérisée en ce que** ledit élément de commande (24) comprend une tige adaptée qui, dans la zone centrale inférieure, présente une portion susceptible de s'engager dans ladite ouverture (40 - 40' - 40") du clapet (38) pour provoquer un déplacement axial de celui-ci et qui comprend une lame (26) de forme essentiellement parallélépipédique dont les deux faces rectangulaires opposées d'extension plus courte (36 - 36') sont chanfreinées le long des côtés verticaux, la lame (26) se prolongeant en partie basse par une extrémité cylindrique (28) s'insérant dans un retrait complémentaire (28') pratiqué à la base du premier alésage (14) sur l'axe vertical "X" du second alésage (20),
où ledit premier alésage (14) et l'alésage de plus petit diamètre (16) se rejoignent l'un avec l'autre par une entrée conique (46'), sur laquelle agit un moyen de blocage d'écoulement porté par le clapet (38),
où ledit moyen de blocage qui agit sur l'entrée conique (46') comprise entre ledit premier alésage (14) et l'alésage de plus petit diamètre (16), est constitué par un joint (42') disposé dans un siège annulaire (44) dudit clapet (38),
où ledit joint (42') est disposé adjacent à une extrémité conique (42) dudit clapet (38), qui s'étend en un corps configuré en développement annulaire comprenant une première partie (48) à profil arqué convexe adaptée à jouxter une partie de la surface latérale interne du corps (12) définie par ledit premier alésage (14), et
où ledit corps annulaire du clapet (38) comprend en outre une seconde partie (50) de section quadrangulaire qui se recourbe à 90 degrés en une branche d'une seule pièce (50'), avec ladite première partie (48) avec laquelle elle se raccorde en formant une surface plane (52) sensiblement conformée en T'.

2. Valve selon la revendication 2, **caractérisée en ce que** ledit élément de commande (24) comprend, en plus de ladite lame (26), une ou plusieurs gorges (30) pour le nombre de joints correspondant, de même qu'une partie d'extrémité nantie d'un filetage et/ou de zones aplaties opposées (32) pour positionner et fixer un levier de commande (34) ou équivalent.

3. Valve selon la revendication 1, **caractérisée en ce que** ladite ouverture traversante à profil adapté (40 - 40' - 40") dudit clapet (38) est délimitée par les parois internes de la première partie (48) au profil arqué convexe, par l'extrémité conique (42), par la seconde partie (50) et par la branche (52), ladite ouverture (40 - 40' - 40") comprenant dans son développement des zones rectilignes, des zones arquées concaves et des zones arquées convexes, qui définissent une came pour le coulissement du clapet (38) sur la base de la rotation imposée à la lame (26) de l'élément de commande (24).

4. Valve selon la revendication 1, **caractérisée en ce que** le second alésage (20) est réalisé sur le corps (12) en partant d'un appendice cylindrique (22) faisant saillie le long du même corps (12).
